# EUROPEAN PATENT SPECIFICATION

(11) **EP 2 990 704 B1**
(45) Date of publication and mention of the grant of the patent: **26.07.2017**
(21) Application number: 14182433.4
(22) Date of filing: 27.08.2014
(51) Int. Cl.: F16K 17/04, F16K 17/06

(54) **Pneumatic valve and air mattress assembly having pneumatic valve**
Pneumatisches Ventil und Luftmatratze mit pneumatischem Ventil
Robinet à commande pneumatique et ensemble de matelas d'air doté d'une soupape pneumatique

(43) Date of publication of application: 02.03.2016
(73) Proprietor: Apex Medical Corp., New Taipei City, 23679 (TW)
(72) Inventor: Shen, Wen-Bin, 23679 New Taipei City (TW)
(74) Representative: Schwerbrock, Florian

(56) References cited:
- WO-A1-93/21803
- WO-A1-02/062595
- WO-A1-2010/004511
- JP-A- 2011 137 479
- US-A- 2 980 132
- US-A- 3 402 734
- US-A- 3 636 966

## Description

### FIELD OF THE INVENTION

The present invention relates to a gas valve and more particularly to a pneumatic valve for pressure regulation of an air mattress.

### BACKGROUND OF THE INVENTION

Taiwan Patent No. M241551 discloses a relief valve, which has flow guide grooves formed on the conical body and a curved spring disposed in the connector, wherein the flow guide grooves may increase the gap between the conical body and the connector, and the curved spring may be oscillated and tilted by an angle by high pressure gas. The two structural designs are used to reduce collision frequency of gas molecules and reduce noise.

In addition, Taiwan Patent No. M426690 discloses a pressure regulation valve containing a connection tube received therein with a ball and a spring. The spring has a middle section with a diameter greater than two ends to reduce the gap between the spring and the inner wall of the connection tube, thereby reducing oscillation of the spring and inhibiting noise. The spherical ball allows stable passage of gas through the inlet to perform pressure regulation and to prevent unstable gas pressure within the pressure equipment.

WO 2010004511A1 discloses a pressure relief valve for use in hydraulic circuits. The pressure relief valve comprises a cartridge, a spring-holding plug, a closure member having an axial through hole, a main spring, a piston having an axial through hole, a setting spring, a spring plate and a plate with an axial through hole; the cartridge has internal chambers such as a main spring chamber, a ring of radial through holes and one or more holes for communication of the main spring chamber with the discharge line; the closure member is composed of a head, a cylindrical surface and an end part; the pressure relief valve is characterized in that the coupling surfaces between: the head of the closure member and the edge of the cartridge, the surface of the closure member and the interior of the cartridge, the end part of the closure member and the hole of the piston, the outer surface of the piston and the interior of the cartridge are formed with geometric precision and sized to actually prevent fluid leakage at the operating pressure of the valve; the coupling surfaces is coaxial to ensure that friction during relative motion of the parts is negligible.

US 3402734A1 discloses a pressure relief valve for hydraulic systems. The pressure relief valve comprises a valve body having a bore, a cylindrical poppet valve, at least one outlet pressure relief passage communicating with the bore of the valve body, a cylindrical pilot valve slideably disposed within a bore of the poppet valve, a spring for urging the pilot valve in a direction toward the poppet valve, and a return spring for moving the poppet valve to its seat after it has opened and system pressure has dropped to a desired value below cracking pressure. When the poppet valve is closed, it is maintained on its seat by the constant pressure of its return spring and the product of system pressure and the projected area of its tapering end, whereby increase in system pressure applied to its rear surface increases the pressure of the poppet valve on its seat, and when the pilot valve moves to a position to relieve pressure in the chamber, system pressure applied to the forward end of the poppet valve moves it to unblocked position relative to the outlet passage.

US 3636966A1 discloses a device for regulating the pneumatic pressure in a ventilated space suit relative to the pressure imposed on the suit when being worn by a person underwater to simulate space environment for testing and experimentation. A box unit located on the chest area of the suit comprises connections for suit air supply and return lines and carries a regulator valve that stabilizes the air pressure differential between the inside and outside of the suit. The valve and thus suit pressure is controlled by the suit occupant and the valve includes a mechanism for quickly dumping the suit pressure in case of emergency.

US 2980132A1 discloses a safety relief valve assembly for a hydraulic system having pressure inlet means. The safety relief valve assembly comprises means defining an inlet and outlet and a chamber interconnecting the inlet and outlet; a hollow valve body disposed in the chamber and has a cylindrical interior with an end wall sealingly separating the inlet from the outlet; the end wall has a central circular aperture therethrough communicating the inlet with the body interior; the body has a valve seat surrounding the aperture and has at least one opening communicating the body interior with the outlet; a cylindrical valve slidable in the body over a generally long stroke between an open position in which the opening is exposed to the body interior and a closed position in which the valve fully closes the aperture and only partially closes the opening; the opening has a configuration which gradually exposes a greater proportion thereof to the body interior upon movement of the valve to open position; biasing means urges the valve into closed position; the valve has a nose engageable with the valve seat to close the aperture; one end of the nose is conically shaped and extending through the aperture in the closed valve position to graually expose a greater proportion of the aperture to the body interior upon movement of the valve to open position and which is substantially elongated to provide a long stroke for the valve in fully exposing the aperture; the conical end of the nose provides a first surface subject to the system pressure when the valve is closed and is acted upon to provide initial valve movement in overcoming the biasing means; the valve has a generally at surface adjacent the base of the nose and disposed normally to the movable path of the valve; the second surface forms a variable intermediate chamber with the valve body through which the system pressure must pass to reach the body opening; the second surface is substantially larger in area than the aperture in order to continue to provide an effective load to overcome the biasing means even though a pressure drop occurs locally about the first surface when the valve is moved from closed position by system pressure.

WO 9321803A1 discloses an air system which reacts to pressure loading is integrated into the mattress. It consists of the pump body, the air reservoir, the airlines, the one-way valves, the manually adjustable pressure regulating valve fitted with a scale and the insulating air core. Maintenance of the pressure in the air core is ensured in that the local pressure loading resulting from the use of the mattress forces air from the pump bodies via the one-way valves into the unloaded reservoir. This air which becomes compressed in the reservoir remains as a reserve and equalises the pressure lost in the air core by diffusion via the adjustable pressure regulating valve fitted with a scale and a rotary knob to the requirement adjustable on the scale.

WO 02/062595A1 discloses a pressure relief valve which can be applied to the valve of a pneumatic tyre. The pressure relief valve comprising; (a) a substantially elongate valve body having an internal air bleed chamber, an adjacent air bleed passage and a tyre valve engagement means, (b) a cap adjustably attached to an open end of the air bleed chamber, (c) a valve piston within the air bleed chamber said valve piston having a piston head which is adapted to engage with a valve seat located between the air bleed chamber and the air bleed passage and an extending piston stem the free end of which extends to and engages with a centralised aperture in the cap, (d) a biasing spring mounted on the valve piston stem which is compressed between the cap and the valve piston and applies a continuous closing bias to the valve head, (e) an air bleed hole in the wall of the valve body which is above and in close proximity to the valve seat, and (f) a strike pin extending from the tyre valve engagement means the arrangement and construction being such that when the valve body is coupled to a two-way valve of a pneumatic tyre and the strike pin contacts a needle within the two-way valve pressures within the tyre can be reduced in proportion with a predetermined compression applied to the spring, characterised in that the air bleed chamber and cap have complimentary external and internal threads and the compression of the spring of the valve is adjusted according to the degree that the cap is advanced on the air bleed chamber thread.

JP 2011-137479 A discloses a relief valve of an oil pump for letting a part of oil discharged from the oil pump go as a surplus oil, especially, which is capable of easily obtaining a hydraulic pressure characteristic in accordance with required hydraulic pressure characteristics. The relief valve of the oil pump includes a valve housing with a valve passage, in which the relief valve is freely reciprocated, a relief inflow part formed on one end side in the moving direction of the relief valve in the valve passage, a first relief discharge hole formed in the valve passage and consisting of a circumferential direction discharge hole and an axial direction discharge hole, and a second relief discharge hole formed in the valve passage to be positioned apart from the first relief discharge hole. The circumferential direction discharge hole and the axial direction discharge hole of the first relief discharge hole are communicated, and the circumferential direction discharge hole is positioned most closely to the relief inflow part.

Although various designs have been proposed to reduce noise, they are not satisfactory at least in some aspects.

### SUMMARY OF THE INVENTION

A primary objective of this invention is to provide a pneumatic valve with reduced noise during operation.

To achieve the aforesaid objective, this invention provides a pneumatic valve comprising a gas passage tube, a plug member, an elastic member and an adjustment member, wherein the gas passage tube is connected with the adjustment member and has a gas inlet and at least one first opening, the first opening being arranged between the gas inlet and the adjustment member; the plug member is disposed in the gas passage tube and has a blocking portion, the blocking portion having a first end proximal to the gas inlet and a second end distal from the gas inlet, the first end and the second end being located at two different sides of the first opening respectively; and the elastic member is arranged between the plug member and the adjustment member.

This invention further provides a pneumatic valve comprising a gas passage tube, a plug member, an elastic member and an adjustment member, wherein the gas passage tube is connected with the adjustment member and has a gas inlet and at least one first opening, the first opening being arranged between the gas inlet and the adjustment member; the plug member is disposed in the gas passage tube and has a blocking portion, the blocking portion having a first end proximal to the gas inlet and a second end distal from the gas inlet; and wherein the plug member is switchable between a deflation state and a non-deflation state in such a way that the plug member has a portion with the greatest width arranged between the first opening and the elastic member in both states.

Moreover, this invention provides an air mattress assembly comprising: an air mattress body comprising a plurality of air tubes; at least one pneumatic valve recited above in gas communication with at least one of the air tubes; and a manipulation unit having a rotary knob configured for controlling pressure regulation of the air mattress body, the rotary knob being operably linked to the adjustment member of the pneumatic valve to allow adjustment of a force imposed by the elastic member on the plug member.

Using the structural design of the plug member and the positional relationship between the plug member and the first opening, as described above, in the presence of high pressure gas, the first end of the blocking portion of the plug member is pushed and moved inwardly, such that the high pressure gas passing through the gas inlet may enter the gas passage tube from the gap formed between the blocking portion of the plug member and the inner wall of the gas passage tube and leave the valve from the first opening. Since the second end of the blocking portion of the plug member is arranged at one side of the first opening opposite to the gas inlet, it occupies a part of, if not all, the space of the passage defined in the gas passage tube, and high pressure gas is prevented from passing through the second end of the blocking portion of the plug member and forming turbulence or oscillating the elastic member and the adjustment member, thereby reducing the noise caused by oscillation of the components as well as the noise caused by gas turbulence.

A main feature of this invention lies in that, in both the deflation state and the non-deflation or ordinary state, at one side of the first opening opposite to the gas inlet, the passage defined in the gas passage tube is substantially blocked or occupied by the plug member, thereby inhibiting gas passage therethrough and noise resulted therefrom.

It is to be understood that both the foregoing general description and the following detailed description are exemplary and explanatory only and are not restrictive of the invention as defined in the claims.

### BRIEF DESCRIPTION OF THE DRAWINGS

A more complete understanding of the subject matter can be derived by referring to the detailed description and claims when considered in conjunction with the following figures, wherein like reference numbers refer to similar elements throughout the figures.
FIG. 1 illustrates an exploded view showing an exemplary embodiment of the pneumatic valve according to this invention;
FIG. 2 illustrates a cross-sectional view showing an exemplary embodiment of the pneumatic valve according to this invention in an ordinary or non-deflation state;
FIG. 3 illustrates a cross-sectional view showing an exemplary embodiment of the pneumatic valve according to this invention in a deflation state; and
FIG. 4 illustrates a schematic view showing an exemplary embodiment of the air mattress assembly according to this invention.

### DETAILED DESCRIPTION OF THE INVENTION

In order to further explain the concepts and principles behind this invention, the operational states and structural configuration of various embodiments are described with the accompanying drawings. However, there is no intention to be bound by any expressed or implied theory presented in the preceding technical field, background, brief summary or the following detailed description.

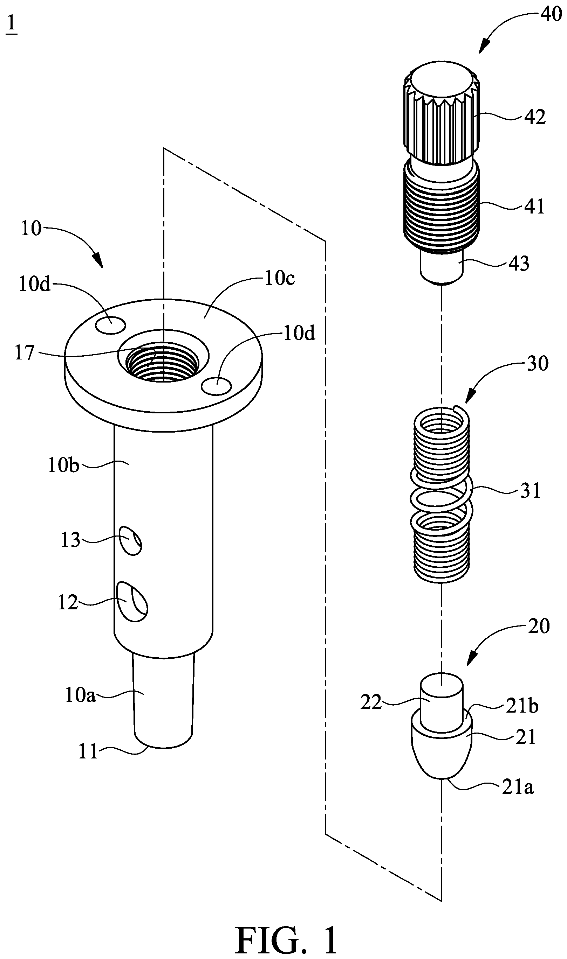

FIG. 1 illustrates an exploded view showing an embodiment of the pneumatic valve according to the present invention. In this embodiment, pneumatic valve 1 mainly comprises a gas passage tube 10, a plug member 20, an elastic member 30 and an adjustment member 40. The plug member 20 is received in the gas passage tube 10, and the elastic member 30 has one end elastically pushing the plug member 20 and the other end supported by the adjustment member 40, which is adjustably connected with the gas passage tube 10.

To more concisely describe the size and spatial relationship between different components, the term "width" is defined hereinafter as the maximum length of a cross-section obtained from a direction perpendicular to the longitudinal direction of the gas passage tube 10. Generally, "width" and "cross-section" are synonyms to each other and interchangeably used. For a component with a cylindrical or similar shape, the width of the component or a part thereof refers to the diameter of its cross-section.

The gas passage tube 10 has a hollow tubular structure similar to a syringe. It defines an accommodation space therein for receiving other components, such as the plug member 20 and the elastic member 30. Thread 17 is formed on the inner wall at one end for corresponding connection with the adjustment member 40. Depending on the need for installation or use, the gas passage tube 10 may be optionally provided with a securing ring 10c, on which mounting holes 10d are formed to allow the gas passage tube 10 to be mounted by screws in a use environment or connected and operated with other components in the use environment. As illustrated in FIG. 1, in one embodiment, the hollow tubular structure of the gas passage tube 10 may consist of a first tubular section 10a and a second tubular section 10b, connected with each other or integrally formed, each individually having an internal space and a shape that may be the same or different. For example, the first tubular section 10a may define therein a first space as the gas channel, such that gas may enter the gas passage tube 10 from the gas inlet 11 at one end of the first tubular section 10a, and the second tubular section 10b may define therein a second space as the accommodation space for the components. Moreover, the second tubular section 10b is provided with at least one opening on its tubular wall, such as the first opening(s) 12 and second opening(s) 13 as the major and minor gas relief holes respectively. Detailed descriptions of the gas flow path and operational configuration of the components are given below in conjunction with the cross-sectional views of the embodiments.

The plug member 20 is disposed in the gas passage tube 10, such as with one end pushed by the elastic member 30 and therefore situated at a border between the first space and the second space. The plug member 20 has a blocking portion 21 for sealing the first space. In the presence of high pressure gas, the blocking portion 21 is pushed and moved toward the elastic member 30, such that high pressure gas can pass through the gap between the blocking portion 21 and the inner wall of the gas passage tube 10 and then be discharged from the first opening 12. To seal the first space, the blocking portion 21 may have a bullet-like structure as shown in FIG. 1, such as half of a prolate spheroidal or oval structure, having a first end 21a and a second end 21b. As used herein, unless otherwise specified, the term "end" refers to the endmost or terminal portion of a structure, which may be a point, a plane, or a structural region, depending on the geometric shape of the structure referred to. For example, in FIG. 1, the first end 21a of the blocking portion 21 is the protruded tip portion of the bullet-like structure, and the second end 21b of the blocking portion 21 is the flat bottom of the bullet-like structure. In order to improve the sealing effect, the first end 21 a of the blocking portion 21 may extend into the first space, such that the inner wall of the first tubular section 10a and the circumferential surface of the blocking portion 21 form airtight or sealed connection to prevent gas from passing through the plug member 20 and being discharged from the first opening 12 in the non-deflation state. The second end 21b of the blocking portion 21 may be a circular flat plane arranged in the second space and preferably have a cross-section greater than other portions of the blocking portion 21, such as approximately equal to or slightly less than the cross-section defined by the corresponding inner wall of the gas passage tube 10, so as to minimize or inhibit gas passage through the second end 21b of the blocking portion 21 and noise resulted therefrom. In order to firmly connect the plug member 20 and the elastic member 30, the plug member 20 may have a connection portion 22, such as a cylindrical structure with a diameter slightly greater than the inner diameter of one end of the elastic member 30, rendering the plug member 20 as a mushroom-like structure and fittingly and tightly combining the elastic member 30 with the plug member 20. As used herein, unless otherwise specified, "fittingly and tightly combine" or analogous expression refers to two structures combined and fit together tightly and firmly. Generally, a force is required to deform one structure to fittingly and tightly combine it with the other structure. For example, an elastic structure needs to be stretched or compressed to fittingly and tightly combine it with other structures.

The elastic member 30 may be an elongated spring structure, with one end abutting against the plug member 20 and the other end abutting against the adjustment member 40. In one embodiment, two ends of the elastic member 30 are respectively fittingly and tightly sleeved on the connection portion 22 of the plug member 20 and the connection portion 43 of the adjustment member 40. The elastic member 30 is disposed in the gas passage tube 10, such as in the accommodation space defined by the second tubular section 10b. The elastic member 30 serves to elastically push the plug member 20, such that the plug member 20 can tightly seal the gas channel in the gas passage tube 10, preventing gas from being discharged from the opening on the gas passage tube 10. According to the above-mentioned structural design, only when the pressure of the high pressure gas is greater than the elastic pushing force of the elastic member 30, will the plug member 20 be pushed and moved toward the elastic member 30, thereby allowing gas to pass through the gap between the plug member 20 and the inner wall of the gas passage tube 10 and leave from the first openings 12. In one embodiment, the middle section 31 of the elastic member 30 may have a width greater than that of other sections, such that the gap between the elastic member 30 and the inner wall of the gas passage tube 10 may be narrowed to minimize the oscillation of the elastic member 30 and reduce the noise resulted therefrom.

The adjustment member 40 is generally connected with the terminal of the gas passage tube 10, serving to abut and support the elastic member 30 and make the elastic member 30 press against the plug member 20. The adjustment member 40 may have a thread 41, an engagement section 42 and a connection portion 43. The thread 41 is engageable with the thread 17 of the gas passage tube 10 correspondingly, to enable users to rotatably adjust the engagement tightness or depth between the adjustment member 40 and the gas passage tube 10, so as to adjust the elastic force of the elastic member 30 on the plug member 20. The connection portion 43 may have a shape and a size similar to the connection portion 22 of the plug member 20 and may also be fittingly and tightly sleeved by the elastic member 30. A plurality of teeth are formed on the engagement section 42 to mesh and operably link to external components, by which users may adjust the relative relationship between the adjustment member 40 and the gas passage tube 10 so as to modify the pushing force of the elastic member 30 against the plug member 20.

The advantageous features, structural designs and operational configurations of this invention are further elaborated below by referring to the cross-sectional views of one embodiment of this invention.

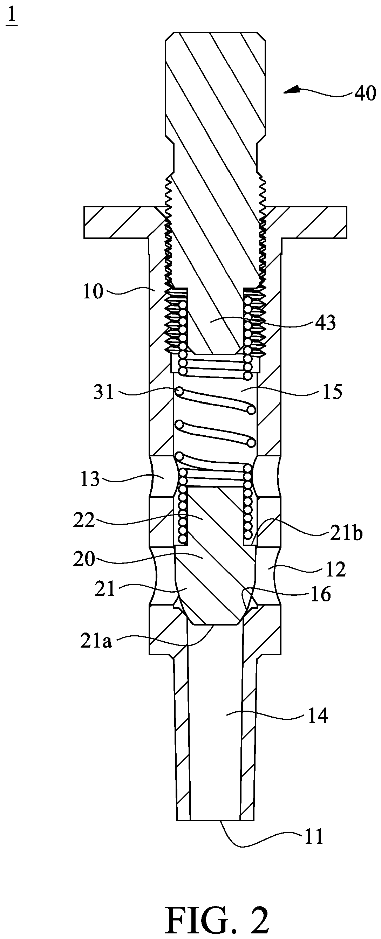

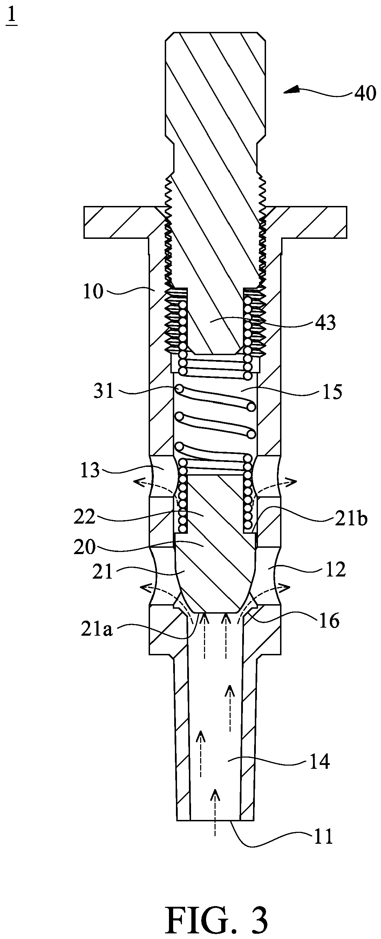

FIGs. 2 and 3 respectively illustrate the spatial configurations of different components in an ordinary state and a deflation state. In the ordinary or non-deflation state, there is no high pressure gas entering the pneumatic valve 1 from the gas inlet 11, or the pressure of the high pressure gas is less than the elastic force of the elastic member 30 set by users through the adjustment member 40, so the blocking portion 21 of the plug member 20 is airtightly situated and secured in the hollow channel in the gas passage tube 10 and airtightly connected with the inner wall of the gas passage tube 10. In order to secure the plug member 20 in the hollow channel in the gas passage tube 10, such as between the first space 14 and the second space 15, an obstruction structure 16, such as a protrusion or other similar structures, can be formed on the inner wall of the gas passage tube 10, and the plug member 20 may be positioned within the gas passage tube 10 at a predetermined position by the elastic member 30 and the obstruction structure 16. In this embodiment, the curved inner wall at the border between the first space 14 and the second space 15 serves as the obstruction structure 16.

As described above, the gas passage tube 10 may define therein the first space 14 and the second space 15, wherein the first space 14 serves as the gas channel for introducing gas from the gas inlet 11 into the gas passage tube 10, and the second space 15 serves as the accommodation space for receiving the components. In this embodiment, the first space 14 is a gas channel gradually expanded from the gas inlet 11 inwardly, which serves as a flow guide to allow the high pressure gas to gently and smoothly push the plug member 20 to inwardly compress the elastic member 30, thereby providing a gentle and moderate gas deflation effect, avoiding abrupt gas deflation, and prolonging the service life of the components such as the plug member 20, the elastic member 30, etc.

In this embodiment, the blocking portion 21 of the plug member 20 has a first end 21a and a second end 21b, wherein the first end 21a has gas-modulating means, such as a flat surface, a concave surface or a convex surface. When the high pressure gas enters the gas passage tube 10 from the gas inlet 11, the gas-modulating means enables a substantial part of the high pressure gas to act on the plug member 20 in a direction substantially perpendicular to the first end 21a, thereby making the gas act on the plug member 20 with a normal force greater than a shear stress. As an example, the gas-modulating means may be implemented by configuring the first end 21 a as a blunt end, such as the flat plane shown in FIG. 2. The gas-modulating means provides several advantages as described below. When the plug member 20 is pushed and moved inwardly by the high pressure gas, said flat plane and the inner wall of the gas passage tube 10 define a gap therebetween greater than the one formed using a spherical or conical structural design with the same displacement or movement amount, therefore providing a greater deflation efficiency per time unit than other shapes. In addition, if the first end 21 a of the blocking portion 21 is configured as a flat plane perpendicular to the gas channel of the first space 14, when the high pressure gas enters the first space 14, most gas molecules impact the plug member 20 in a direction perpendicular to the flat plane; therefore, under the same flow amount or pneumatic pressure, said structural design results in a greater displacement amount of the plug member 20 than other shapes and consequently forms a larger gap between the plug member 20 and the inner wall of the gas passage tube 10, thereby increasing the deflation efficiency. Moreover, the flat plane design may divert the high pressure gas by a large extent, avoiding the high pressure gas from further moving into the gas passage tube 10 and discharging the gas from the gas relief holes at two sides, thereby inhibiting the high pressure gas from passing through the plug member 20 and causing oscillation of the components in the gas passage tube 10 and forming turbulence.

In this embodiment, the size of each component may be designed as described below, wherein the term "width" is defined as recited above as the maximum length of a cross-section obtained from a direction perpendicular to the longitudinal direction of the gas passage tube 10. For a circular cross-section, the width represents its diameter.

One side of the first space 14 close to the gas inlet 11 has a width less than that of the other side, and the first end 21 a of the blocking portion 21 has a width slightly less than that of one side of the first space 14 distal from the gas inlet 11, such that the blocking portion 21 may partially extend into the first space 14. The second end 21b of the blocking portion 21 has a width greater than other portions of the blocking portion 21 and substantially equal to or slightly less than the inner diameter of the corresponding portion of the gas passage tube 10, such that there is nearly no gap between the inner wall of the gas passage tube 10 and the second end 21b of the blocking portion 21, which may reduce the noise caused by the collision between the plug member 20 and the gas passage tube 10 due to oscillation on one hand, and on the other hand prevent the high pressure gas from passing through the plug member 20 and generating noise due to turbulence formation or oscillation of the elastic member 30. In addition, in this embodiment, the first end 21 a and the second end 21b of the blocking portion 21 are respectively arranged at different sides of the first opening 12. In other words, as illustrate in FIG. 2, in the non-deflation state, the first end 21a and the second end 21b of the blocking portion 21 are both situated out of the first opening 12 and are located below and above the first opening 12 respectively. For example, the position of the first end 21 a is slightly lower than the first opening 12 to seal the first space 14, and the position of the second end 21b is slightly higher than the first opening 12 to prevent gas passage therethrough, as described in detail below.

The inner diameters or widths of two end portions of the elastic member 30 are both slightly less than those of the connection portion 22 of the plug member 20 and the connection portion 43 of the adjustment member 40. Therefore, by stretching the elastic member 30 and sleeving it on the connection portion 22 and the connection portion 43, the elastic member 30 may be fittingly and tightly combined with the plug member 20 and the adjustment member 40, so as to prevent the noise caused by oscillation of these components and firmly secure the elastic member 30 even after repeated use. In addition, the middle section 31 of the elastic member 30 has a width substantially equal to or slightly less than the inner diameter of the corresponding portion of the gas passage tube 10, such that there is nearly no gap between the inner wall of the gas passage tube 10 and the middle section 31 of the elastic member 30, thereby reducing the noise caused by the collision between the elastic member 30 and the gas passage tube 10 due to oscillation. However, in view of the friction between the components during operation, the width of the second end 21b of the blocking portion 21 and the width of the middle section 31 of the elastic member 30 may be slightly less than the inner diameter of the corresponding portions of the gas passage tube 10 so as to prevent friction between the components or unsmooth operation and prolong the service life of the components.

FIG. 3 illustrates the cross-sectional view of the pneumatic valve 1 in the presence of high pressure gas, which is denoted by broken lines and arrows. In the deflation state, the high pressure gas flows from the air mattress into the gas inlet 11 and enters the first space 14 to push the plug member 20. If the pneumatic pressure is greater than the elastic force imposed on the plug member 20 by the elastic member 30, the plug member 20 will be pushed by the high pressure gas and moved inwardly, such that a gap is formed between the plug member 20 and the inner wall of the gas passage tube 10, and the gas may pass through the plug member 20 and leave or be deflated from the gas relief holes, such as the first openings 12, thereby achieving the purpose of deflation.

In this embodiment, the gas passage tube 10 is configured thereon with two first openings 12, which are arranged symmetrically about the longitudinal direction of the gas passage tube 10, such that the gas may be deflated from both first openings 12 by the substantially same flow rate. In addition, in this embodiment, because the second end 21b of the blocking portion 21 has a width greater than that of the first end 21a and there is nearly no or minimal gap between the second end 21b of the blocking portion 21 and the inner wall of the gas passage tube 10, most of the gas will change the direction after impacting the first end 21 a of the blocking portion 21 and then leave from the first openings 12. However, on rare occasions, there may be a small amount of gas passing through the second end 21b of the blocking portion 21. In this situation, if too much high pressure gas accumulates in the space above the plug member 20, a pneumatic pressure will be formed in the space which downwardly pushes the plug member 20 and results in a poor deflation effect. In this regard, the gas passage tube 10 is further configured with second openings 13 as the minor gas relief holes on the tubular wall above the first openings 12, so as to discharge the gas not deflated from the first openings 12 and passing through the blocking portion 21. In this embodiment, the quantity and size of the second openings 13 are not particularly limited, but two second openings 13 may be adopted; in addition, the second openings 13 may also be arranged symmetrically about the longitudinal direction of the gas passage tube 10.

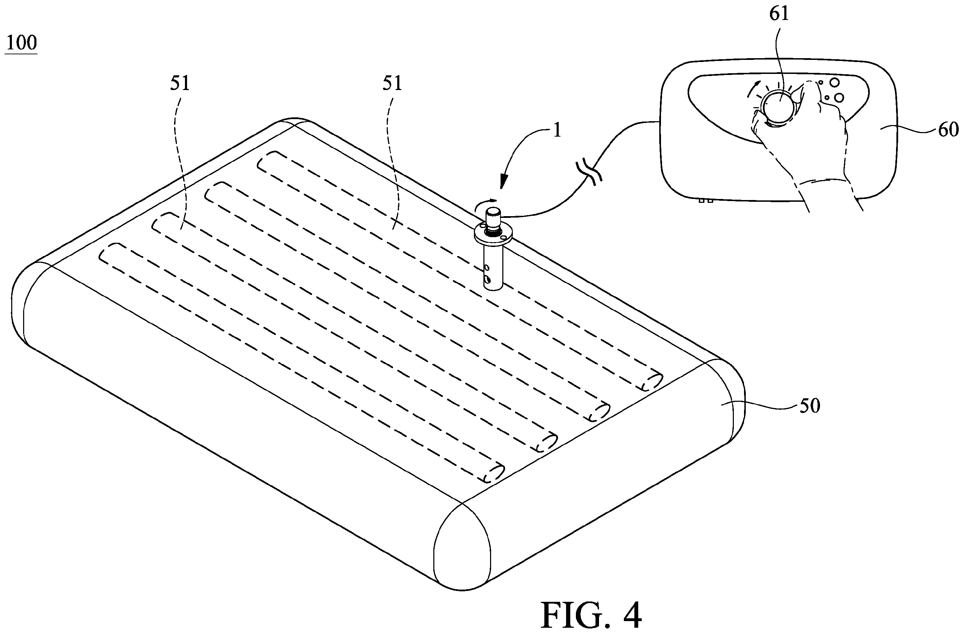

The use environment of the pneumatic valve 1 according to one embodiment of this invention is illustrated below. As shown in FIG. 4, the pneumatic valve 1 may be used in an air mattress assembly 100, which further comprises an air mattress body 50 and a manipulation unit 60, wherein the pneumatic valve 1 is in gas communication with at least one air tube 51 of the air mattress body 50. Therefore, during the deflation of the air mattress body 50, high pressure gas in the air tube 51 may enter the pneumatic valve 1 through the gas inlet 11 to initiate the foregoing deflation process. In addition, the pneumatic valve 1 may be linked or coupled to the rotary knob 61 of the manipulation unit 60 via the engagement section 42 of the adjustment member 40, thereby allowing a user to adjust the elastic force of the elastic member 30 in the pneumatic valve 1 by rotating the rotary knob 61. Generally, the installation position of the pneumatic valve 1 is not particularly limited, and it may be installed in the air mattress body 50 or in the manipulation unit 60, such as being fastened in the rotary knob 61 through the mounting holes 10d. In addition, the operational linkage between the adjustment member 40 of the pneumatic valve 1 and the rotary knob 61 may vary as needed to provide users with convenience in use. For example, an equal rotation angle relationship can be employed, such that when a user rotates the rotary knob 61 by such as 10 degrees, the adjustment member 40 may similarly rotate by 10 degrees; alternatively, a proportional rotation relationship can be employed, such that when a user rotates the rotary knob 61 by such as 10 degrees, the adjustment member 40 correspondingly rotates 1, 2 or 5 degrees, thereby allowing the user to fine-tune or precisely adjust the pneumatic valve 1; alternatively, a stagewise rotation relationship can be employed, such that when a user rotates the rotary knob 61 by 0 to 10 degrees, the adjustment member 40 does not rotate correspondingly, and when the user rotates the rotary knob 61 by 10 to 20 degrees, the adjustment member 40 rotates correspondingly by 1, 2 or 5 degrees. Detailed illustrations for achieving the operational linkage for various rotation relationships are omitted for brevity as they are conceivable by a person skilled in the art without undue experimentation.

The above detailed description is merely illustrative in nature and is not intended to limit the embodiments of the subject matter or the application and uses of such embodiments. As used herein, the term "exemplary" means "serving as an example, instance, or illustration." Any implementation described herein as exemplary is not necessarily to be construed as preferred or advantageous over other implementations.

Moreover, while at least one exemplary embodiment has been presented in the foregoing detailed description, it should be appreciated that a vast number of variations exist. It should also be appreciated that the exemplary one or more embodiments described herein are not intended to limit the scope, applicability, or configuration of the claimed subject matter in any way. Rather, the foregoing detailed description will provide those skilled in the art with a convenient guide for implementing the described one or more embodiments. Also, various changes can be made in the function and arrangement of elements without departing from the scope defined by the claims, which include known equivalents and foreseeable equivalents at the time of filing this patent application.

## Claims

1. A pneumatic valve (1), comprising a gas passage tube (10), a plug member (20), an elastic member (30) and an adjustment member (40), wherein the gas passage tube (10) is connected with the adjustment member (40) and has a gas inlet (11) and at least one first opening (12), the first opening (12) being arranged between the gas inlet (11) and the adjustment member (40); the plug member (20) is disposed in the gas passage tube (10) and has a blocking portion (21), the blocking portion (21) having a first end (21a) proximal to the gas inlet (11) and a second end (21b) distal from the gas inlet (11), the first end (21 a) and the second end (21b) being located at two sides of the first opening (12) respectively; and the elastic member (30) is arranged between the plug member (20) and the adjustment member (40); wherein the first end (21a) of the blocking portion (21) is a blunt end, and the blunt end has a flat plane; **characterized in that** the gas passage tube (10) further comprises at least one second opening (13) arranged between the first opening (12) and the adjustment member (40) so as to discharge gas not deflated from the first openings (12) and passing through the blocking portion (21).

2. The pneumatic valve (1) of claim 1, wherein the gas passage tube (10) comprises two first openings (12) and two second openings (13) respectively arranged symmetrically about a longitudinal direction of the gas passage tube (10).

3. The pneumatic valve (1) of claim 1, wherein the first end (21a) of the blocking portion (21) is provided with gas-modulating means for enabling gas entering the gas passage tube (10) from the gas inlet (11) to act on the plug member (20) with a normal force greater than a shear stress.

4. The pneumatic valve (1) of claim 1, wherein the gas passage tube (10) defines a first space (14) and a second space (15) therein, and the first space (14) is a gas channel gradually expanded from the gas inlet (11) inwardly.

5. The pneumatic valve (1) of claim 4, wherein the first end (21a) and the second end (21b) of the blocking portion (21) are respectively disposed in the first space (14) and the second space (15).

6. The pneumatic valve (1) of claim 4, wherein the gas passage tube (10) comprises an obstruction structure (16) formed at a border between the first space (14) and the second space (15), the obstruction structure (16) and the elastic member (30) collectively positioning the plug member (20) in the gas passage tube (10).

7. The pneumatic valve (1) of claim 1, wherein a portion of the blocking portion (21) with the greatest width is located between the first opening (12) and the second opening (13).

8. An air mattress assembly (100), comprising:
an air mattress body (50) comprising a plurality of air tubes (51);
at least one pneumatic valve (1) recited in claim 1 in gas communication with at least one of the air tubes (51); and
a manipulation unit (60) having a rotary knob (61) configured for controlling pressure regulation of the air mattress body (50), the rotary knob (61) being operably linked to the adjustment member (40) of the pneumatic valve (1) to allow adjustment of a force imposed by the elastic member (30) on the plug member (20).

9. The air mattress assembly (100) of claim 8, wherein the rotary knob (61) is operably linked to the adjustment member (40) of the pneumatic valve (1) in a proportional rotation relationship such that the adjustment member (40) is rotatable by a smaller angle when the rotary knob (61) is rotated.

## Patentansprüche

1. Pneumatikventil (1), umfassend eine Gasdurchlassröhre (10), ein Kegelelement (20), ein elastisches Element (30) und ein Einstellungselement (40), wobei die Gasdurchlassröhre (10) mit dem Einstellungselement (40) verbunden ist und einen Gaseinlass (11) und wenigstens eine erste Öffnung (12) aufweist, wobei die erste Öffnung (12) zwischen dem Gaseinlass (11) und dem Einstellungselement (40) angeordnet ist; das Kegelelement (20) in der Gasdurchlassröhre (10) angeordnet ist und einen Blockierungsabschnitt (21) aufweist, wobei der Blockierungsabschnitt (21) ein erstes Ende (21a) proximal zu dem Gaseinlass (11) und ein zweites Ende (21b) distal von dem Gaseinlass (11) aufweist, wobei das erste Ende (21a) und das zweite Ende (21b) jeweils auf zwei Seiten der ersten Öffnung (12) angeordnet ist; und das elastische Element (30) zwischen dem Kegelelement (20) und dem Einstellungselement (40) angeordnet ist; wobei das erste Ende (21 a) des Blockierungsabschnitts (21) ein stumpfes Ende ist und das stumpfe Ende eine flache Ebene aufweist; **dadurch gekennzeichnet, dass** die Gasdurchlassröhre (10) ferner wenigstens eine zweite Öffnung (13) umfasst, die zwischen der ersten Öffnung (12) und dem Einstellungselement (40) angeordnet ist, um nicht aus den ersten Öffnungen (12) abgelassenes Gas abzugeben, und durch den Blockierungsabschnitt (21) verläuft.

2. Pneumatikventil (1) nach Anspruch 1, wobei die Gasdurchlassröhre (10) zwei erste Öffnungen (12) und zwei zweite Öffnungen (13) umfasst, die jeweils symmetrisch um eine Längsrichtung der Gasdurchlassröhre (10) angeordnet sind.

3. Pneumatikventil (1) nach Anspruch 1, wobei das erste Ende (21 a) des Blockierungsabschnitts (21) mit einem Gasmodulierungsmittel versehen ist, um zu ermöglichen, dass Gas, das aus dem Gaseinlass (11) in die Gasdurchlassröhre (10) tritt, mit einer normalen Kraft, die größer als eine Schubspannung ist, auf das Kegelelement einwirkt.

4. Pneumatikventil (1) nach Anspruch 1, wobei die Gasdurchlassröhre (10) einen ersten Raum (14) und einen zweiten Raum (15) darin definiert, und der erste Raum (14) ein Gaskanal ist, der sich vom Gaseinlass (11) allmählich nach innen erweitert.

5. Pneumatikventil (1) nach Anspruch 4, wobei das erste Ende (21a) und das zweite Ende (21b) des Blockierungsabschnitts (21) jeweils in dem ersten Raum (14) bzw. dem zweiten Raum (15) angeordnet sind.

6. Pneumatikventil (1) nach Anspruch 4, wobei die Gasdurchlassröhre (10) eine Sperrstruktur (16) umfasst, die an einer Grenze zwischen dem ersten Raum (14) und dem zweiten Raum (15) gebildet ist, wobei die Sperrstruktur (16) und das elastische Element (30) gemeinsam das Kegelelement (20) in der Gasdurchlassröhre (10) positionieren.

7. Pneumatikventil (1) nach Anspruch 1, wobei ein Abschnitt des Blockierungsabschnitts (21) mit der größten Breite zwischen der ersten Öffnung (12) und der zweiten Öffnung (13) angeordnet ist.

8. Luftmatratzenanordnung (100), umfassend:
einen Luftmatratzenkörper (50), umfassend mehrere Luftröhren (51);
wenigstens ein Pneumatikventil (1) nach Anspruch 1 in Gasverbindung mit wenigstens einem der Luftschläuche; und
eine Bedienungseinheit (60) mit einem Drehknopf (61), die dazu konfiguriert ist, Druckregelung des Luftmatratzenkörpers (50) zu steuern, wobei der Drehknopf (61) betriebsfähig mit dem Einstellungselement (40) des Pneumatikventils (1) verbunden ist, um eine Einstellung der Kraft zu ermöglichen, die von dem elastischen Element (30) auf das Kegelelement (20) ausgeübt wird.

9. Luftmatratzenanordnung (100) nach Anspruch 8, wobei der Drehknopf (61) in einem proportionalen Drehverhältnis betriebsfähig mit dem Einstellungselement (40) des Pneumatikventils (1) verbunden ist, derart, dass das Einstellungselement (40) um einen kleineren Winkel drehbar ist, wenn der Drehknopf (61) gedreht wird.

## Revendications

1. Soupape pneumatique (1) comprenant un tube de passage de gaz (10), un élément de prise (20), un élément élastique (30) et un élément d'ajustement (40), où le tube de passage de gaz (10) est relié à l'élément d'ajustement (40) et possède un orifice d'amenée de gaz (11) et au moins une première ouverture (12), la première ouverture (12) étant agencée entre l'orifice d'amenée de gaz (11) et l'élément d'ajustement (40) ; l'élément de prise (20) est agencé dans le tube de passage de gaz (10) et possède une partie de blocage (21), la partie de blocage (21) ayant une première extrémité (21a) proximale de l'orifice d'amenée de gaz (11) et une seconde extrémité (21b) distale de l'orifice d'amenée de gaz (11), la première extrémité (21a) et la seconde extrémité (21b) étant situées aux deux côtés de la première ouverture (12) respectivement ; et l'élément élastique (30) est agencé entre l'élément de prise (20) et l'élément d'ajustement (40) ; où la première extrémité (21a) de la partie de blocage (21) est une extrémité émoussée et l'extrémité émoussée a un plan plat ; **caractérisée en ce que**
le tube de passage de gaz (10) comprend en outre au moins une seconde ouverture (13) agencée entre la première ouverture (12) et l'élément d'ajustement (40) de façon à évacuer le gaz non dégonflé depuis les premières ouvertures (12) et passant à travers la partie de blocage (21).

2. Soupape pneumatique (1) selon la revendication 1, où le tube de passage de gaz (10) comprend deux premières ouvertures (12) et deux secondes ouvertures (13) respectivement, agencées de manière symétrique suivant une direction longitudinale du tube de passage de gaz (10).

3. Soupape pneumatique (1) selon la revendication 1, où la première extrémité (21a) de la partie de blocage (21) est équipée de moyens de modulation de gaz pour permettre au gaz entrant dans le tube de passage de gaz (10) à partir de l'orifice d'amenée de gaz (11) d'agir sur l'élément de prise (20) avec une force normale supérieure à une tension de cisaillement.

4. Soupape pneumatique (1) selon la revendication 1, où le tube de passage de gaz (10) définit un premier espace (14) et un second espace (15) à l'intérieur de celui-ci et le premier espace (14) est un canal de gaz qui s'étend graduellement à partir de l'orifice d'amenée de gaz (11) vers l'intérieur.

5. Soupape pneumatique (1) selon la revendication 4, où la première extrémité (21a) et la seconde extrémité (21b) de la partie de blocage (21) sont agencées dans le premier espace (14) et le second espace (15) respectivement.

6. Soupape pneumatique (1) selon la revendication 4, où le tube de passage de gaz (10) comprend une structure d'obstruction (16) formée à une frontière entre le premier espace (14) et le second espace (15), la structure d'obstruction (16) et l'élément élastique (30) positionnant ensemble l'élément de prise (20) dans le tube de passage de gaz (10).

7. Soupape pneumatique (1) selon la revendication 1, où une partie de la partie de blocage (21) ayant la plus grande largeur est située entre la première ouverture (12) et la seconde ouverture (13).

8. Ensemble de matelas pneumatique (100), comprenant :
un corps de matelas pneumatique (50) comprenant une pluralité de tubes pneumatiques (51) ;
au moins une soupape pneumatique (1) selon la revendication 1 en communication de gaz avec au moins un des tubes pneumatiques (51) ; et
une unité de manipulation (60) ayant un bouton rotatif (61) configuré pour commander une régulation de pression du corps de matelas pneumatique (50), le bouton rotatif (61) étant relié de manière opérationnelle à l'élément d'ajustement (40) de la soupape pneumatique (1) pour permettre l'ajustement d'une force imposée par l'élément élastique (30) sur l'élément de prise (20).

9. Ensemble de matelas pneumatique (100) selon la revendication 8, où le bouton rotatif (61) est relié de manière opérationnelle à l'élément d'ajustement (40) de la soupape pneumatique (1) dans une relation de rotation proportionnelle, de sorte que l'élément d'ajustement (40) puisse être entraîné en rotation selon un angle inférieur quand le bouton rotatif (61) est entraîné en rotation.
